# EUROPÄISCHE PATENTSCHRIFT

(11) **EP 3 519 761 B1**
(45) Veröffentlichungstag und Bekanntmachung des Hinweises auf die Patenterteilung: **08.12.2021**
(21) Anmeldenummer: 17755120.7
(22) Anmeldetag: 10.08.2017
(51) Int. Cl.: G01B 5/255

(54) **RADADAPTER**
WHEEL ADAPTER
ADAPTATEUR DE ROUE

(30) Priorität: 12.09.2016 DE 102016217290
(43) Veröffentlichungstag der Anmeldung: 07.08.2019
(73) Patentinhaber: Beissbarth GmbH, 80993 München (DE)
(72) Erfinder: PETERS, Stefanie, 64289 Darmstadt (DE); ILCHEV, Trendafil, 81369 Muenchen (DE); KAMBHALURU, Vikranth, Bangalore 560010 (IN)
(74) Vertreter: Schmitt-Nilson Schraud Waibel Wohlfrom Patentanwälte Partnerschaft mbB
(86) Internationale Anmeldenummer: PCT/EP2017/070298
(87) Internationale Veröffentlichungsnummer: WO 2018/046222

(56) Entgegenhaltungen:
- DE-B3- 10 242 536
- FR-A1- 3 016 691
- US-A- 1 542 133

## Beschreibung

Die Erfindung betrifft einen Radadapter, insbesondere einen Radadapter zur Fahrzeugvermessung, und ein Verfahren des Montierens eines solchen Radadapters an einem Rad eines Fahrzeugs, insbesondere eines Kraftfahrzeugs.

### Stand der Technik

Zur Fahrwerksvermessung werden häufig Radadapter, die Sensoren und/oder Messmarken ("Targets") tragen können, an den Rädern des zu vermessenden Fahrzeugs montiert. Die Handhabung solcher Radadapter, insbesondere ihre Montage und Demontage an bzw. von den Rädern des Fahrzeugs, ist aufwändig und schwierig. Es sind insbesondere mehrere Arbeitsschritte erforderlich, die mit zwei Händen durchgeführt werden müssen. Eine fehlerhafte und/oder ungenaue Montage eines Radadapters kann bei der Fahrwerksvermessung falsche Messergebnisse zur Folge haben.

FR 3 016 691 A1 offenbart eine Vorrichtung zum Messen des axialen und radialen Abstands zwischen der Außenfläche eines Rades und einem Kotflügel eines Kraftfahrzeugs. Die Vorrichtung umfasst eine Halterung zum Messen und Mittel zum Montieren der Vorrichtung an dem Rad. Der Träger hat eine variable Position und ist mit einer radialen Abtastspitze, die den radialen Abstand messen kann, und einer axialen Abtastspitze, die den axialen Abstand messen kann, versehen. Die Befestigungsmittel umfassen ein Steuerelement, einen Entfaltungsmechanismus und mindestens drei Positionierungsarme, die an dem Rad platziert werden können. Um die Vorrichtung an dem Rad zu befestigen löst die Betätigung des Steuerelements den Mechanismus aus, wodurch sich die Arme in eine Position zu entfalten, die für die Abmessungen des Rads geeignet ist.

DE 10 242 536 B3 offenbart eine Vorrichtung zum Befestigen einer Achsmesseinrichtung an einer Felge eines Rades eines Kraftfahrzeuges, mit einem Grundkörper, mit einer Mehrzahl von Stützarmen an dem Grundkörper, wobei sich die Stützarmein radialer Richtung erstrecken, und mit an den Stützarmen entlang eines in radialer Richtung erstreckenden Verstellweges verstellbar angeordneten Antastspitzen zur Halterung des Grundkörpers an der Felge, wobei die Antastspitzen derart miteinander gekoppelt sind, dass die Verstellung einer Antastspitze zu einer synchronen Verstellung zumindest einer weiteren Antastspitze führt.

US 1 542 133 A offenbart eine Reifenwechselvorrichtung, die eine Kombination aus einem Paar Klemmbacken und einer Einrichtung zum Bewegen der Backen quer zur Linie ihrer Klemmbewegung enthält. Eine der Backen weist einen Abschnitt auf, der in Längsrichtung beweglich geführt ist und eine geringfügige seitliche Bewegung aufweist, die ein freies Längsspiel ohne eine solche Querbewegung zulässt. Das Mittel zur Erzeugung der Querbewegung ist mit einer der Backen verbunden, um sie gegenüber den anderen zu bewegen und dadurch den Abschnitt zu binden.

Es ist eine Aufgabe der Erfindung, die Montage eines Radadapters an den Rädern eines Fahrzeugs zu vereinfachen.

### Offenbarung der Erfindung

Gemäß einem Ausführungsbeispiel der Erfindung hat ein Radadapter, der zur Befestigung an einem Rad, insbesondere an einem Rad eines Kraftfahrzeugs, ausgebildet ist, wenigstens zwei Arme, die sich jeweils von einem zentralen Bereich des Radadapters in einer radialen Richtung nach außen erstrecken. Jeder der Arme weist wenigstens ein bewegliches Element auf, das in radialer Richtung beweglich ist, um die Länge des jeweiligen Armes in radialer Richtung zu variieren. Die beweglichen Elemente von wenigstens zwei Armen sind mechanisch so miteinander gekoppelt, dass eine Bewegung eines beweglichen Elements eines ersten Armes eine entsprechende Bewegung wenigstens eines beweglichen Elements eine zweiten Armes zur Folge hat.

Die beweglichen Elemente sind durch einen Seilzug oder durch einen Riemen miteinander gekoppelt. Ein Seilzug bzw. Riemen ermöglicht eine einfache und zuverlässige mechanische Kopplung der beweglichen Elemente.

Gemäß einem Ausführungsbeispiel der Erfindung umfasst ein Verfahren des Montierens eines Radadapters an einem Rad, insbesondere an einem Rad eines Kraftfahrzeugs, die Schritte:
Fixieren eines ersten beweglichen Elements eines ersten Armes des Radadapters an einer ersten Stelle des Rades;
Bewegen des Radadapter so, dass das wenigstens eine bewegliche Element des ersten Armes derart bewegt wird, dass sich der erste Arm verlängert; und
Anbringen wenigstens eines zweiten beweglichen Elements eines zweiten Armes an einer zweiten Stelle des Rades.

Durch Ausüben von Zug auf wenigstens einen Arm des Radadapters fahren die anderen Arme simultan in gleicher Weise aus und ermöglichen so eine automatische Adaption der Armlänge an unterschiedliche Rad- bzw. Reifengrößen, ohne dass hierfür eine zusätzliche Interaktion des Anwenders notwendig ist. Der Radadapter wird hierfür beispielsweise in einem oberen Bereich des Rades (z. B. der obere Lauffläche, der Felge oder des Felgenhorns) eingehängt und, ggf. mit Unterstützung der Schwerkraft, in Richtung des Radzentrums bewegt. Dies ermöglicht eine einfache und kraftsparende Montage des Radadapters an dem Rad.

Ein erfindungsgemäßer Radadapter ist mit nur einer Hand am Rad anbringbar. Hierdurch werden der Aufwand und die Zeit, die für die Montage des Radadapters benötigt werden, erheblich reduziert.

In einer Ausführungsform sind die beweglichen Elemente aller Arme so mechanisch miteinander gekoppelt, dass eine Bewegung eines beweglichen Elements eines ersten Armes eine entsprechende Bewegung jeweils wenigstens eines beweglichen Elements aller anderen Arme zur Folge hat. Die simultane Adaption der Armlängen aller Arme führt zu einer eindeutig definierte Lage des Radadapters zur Radachse, wie sie für ein akkurate Achsvermessung wichtig ist.

In einer Ausführungsform weist der Radadapter wenigstens einen automatischen Einzugsmechanismus auf, der ausgebildet ist, die beweglichen Elemente der Arme in Richtung des zentralen Bereichs zu bewegen. Auf diese Weise kann der Radadapter sicher an dem Rad (vor)fixiert werden. Im nicht genutzten Zustand werden die Arme des Radadapters automatisch eingezogen. Dies verringert den für die Lagerung des Radadapters benötigten Raum und vermindert das Risiko einer Beschädigung.

In einer Ausführungsform weist der automatische Einzugsmechanismus wenigstens ein elastisches mechanisches Element, beispielsweise eine Feder, auf. Mit Hilfe eines derartigen elastischen Elements lässt sich ein kostengünstiger und zuverlässiger Einzugsmechanismus realisieren.

In einer Ausführungsform weist der automatische Einzugsmechanismus wenigstens einen Elektromotor auf. Ein Einzugsmechanismus, der einen Elektromotor aufweist, ist gezielt ansteuerbar, insbesondere kann die Kraft, mit der die Arme des Radadapters in Richtung des zentralen Bereichs gezogen werden, durch Ansteuern des Elektromotors gut dosiert werden.

In einer Ausführungsform sind die Arme des Radadapters mit feststehenden Schienenelementen und mit beweglichen Schienenelementen, die gegenüber den feststehenden Schienenelementen beweglich sind, ausgebildet. Gegeneinander bewegliche Schienenelemente stellen mechanisch stabile Arme mit variabler Länge zur Verfügung.

In einer Ausführungsform sind die Arme des Radadapters mit Schubladenausziehscharnieren ausgebildet. Schubladenausziehscharniere stellen mechanisch stabile Arme zur Verfügung, deren Länge gut einstellbar ist.

In einer Ausführungsform sind die Arme des Radadapters mit Teleskopschienen und/oder mit Teleskopstangen ausgebildet sind. Teleskopschienen und/oder Teleskopstangen stellen mechanisch stabile Arme zur Verfügung, deren Länge gut einstellbar ist.

In einer Ausführungsform weist der Radadapter zusätzlich einen Verschlussmechanismus auf, der es ermöglicht, die beweglichen Elemente in wenigstens einer Position zu fixieren. Auf diese Weise kann der Radadapter mit einer für die Fahrzeugvermessung notwendigen Genauigkeit und Stabilität an dem Rad fixiert werden.

Ein Ausführungsbeispiel eines erfindungsgemäßen Radadapters wird im Folgenden unter Bezugnahme auf die beigefügten Figuren näher beschrieben.

### Kurze Beschreibung der Figuren

Figur 1 zeigt eine schematische Frontansicht eines Radadapters gemäß einem Ausführungsbeispiel der Erfindung.

Die Figuren 2a und 2b veranschaulichen die Montage eines Radadapters gemäß einem Ausführungsbeispiel der Erfindung an einem Rad.

### Figurenbeschreibung

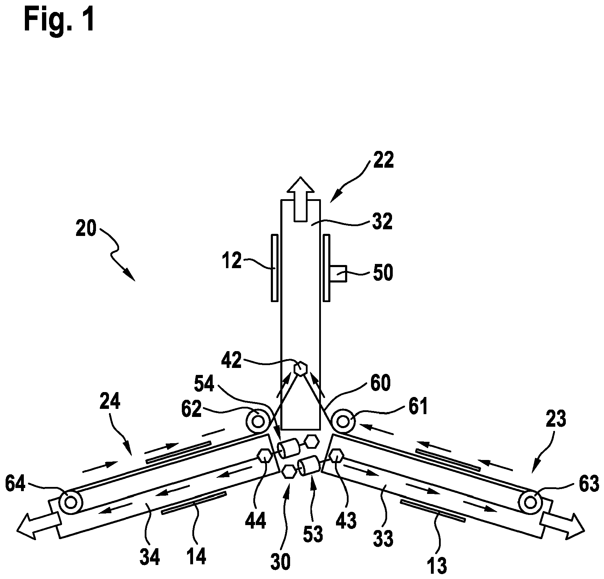

Figur 1 zeigt eine schematische Frontansicht eines Radadapters 20 gemäß einem Ausführungsbeispiel der Erfindung.

Der in der Figur 1 gezeigte Radadapter 20 hat drei Arme 22, 23, 24, die sich von einem zentralen Bereich 30 des Radadapters 20 in radialer Richtung nach außen erstrecken. Die Arme 22, 23, 24 können gleiche oder, wie in der Figur 1, unterschiedliche Winkelabstände voneinander haben. Der Radadapter 20 kann auch mehr oder weniger als drei Arme 22, 23, 24 haben.

Jeder der Arme 22, 23, 24 hat jeweils ein (in der Figur 1 nur schematisch gezeigtes) feststehendes Element 12, 13, 14 und ein bewegliches Element 32, 33, 34, das gegenüber dem jeweiligen feststehenden Element 12, 13, 14 in radialer Richtung beweglich ist. Die Länge der Arme 22, 23, 24 ist so durch Bewegen der beweglichen Elemente 32, 33, 34 in radialer Richtung variierbar.

Die beweglichen Elemente 32, 33, 34 sind durch einen über mehrere Rollen 61, 62, 63, 64 geführten Seilzug / Riemen 60, der an Fixierungspunkten 42, 43, 44 mit den beweglichen Elementen 32, 33, 34 verbunden ist, miteinander gekoppelt. Die Rollen 61, 62, 63, 64 sind in Bereichen an den Enden der Arme 22, 23, 24 angeordnet.

Diese Koppelung bewirkt, dass eine Bewegung eines ersten beweglichen Elements 32 des ersten Armes 22 in radialer Richtung eine entsprechende Bewegung der beweglichen Elemente 33, 34 des zweiten und des dritten Armes 23, 24 zur Folge hat. So ist der Durchmesser / Umfang des Radadapters 20, der durch die äußeren Enden der Arme 22, 23, 24 vorgegeben ist, durch Bewegen des beweglichen Elements 32 des ersten Armes 22 symmetrisch variierbar.

Die Enden des Seilzugs / Riemens 60 sind durch elastische Elemente, z.B. Federelemente, 53, 54 elastisch fixiert. Dadurch werden die beweglichen Elemente 32, 33, 34 von den elastischen Elementen 53, 54 in Richtung des zentralen Bereichs 30 gezogen, wenn keine in radialer Richtung nach außen wirkenden Kräfte auf die beweglichen Elemente 32, 33, 34 ausgeübt werden. So wird der Durchmesser / Umfang des Radadapters 20 im "Ruhezustand", d.h. wenn keine in radialer Richtung nach außen wirkenden Kräfte auf die beweglichen Elemente 32, 33, 34 ausgeübt werden, minimiert.

Der Radadapter 20 weist zusätzlich wenigstens einen Verschlussmechanismus 50 auf, der ausgebildet ist, wenigstens ein bewegliches Element 32, 33, 34 in einer gewünschten Position zu fixieren. Dies ermöglicht es, den Radadapter 20 sicher an einem (in der Figur 1 nicht gezeigten) Rad zu befestigen.

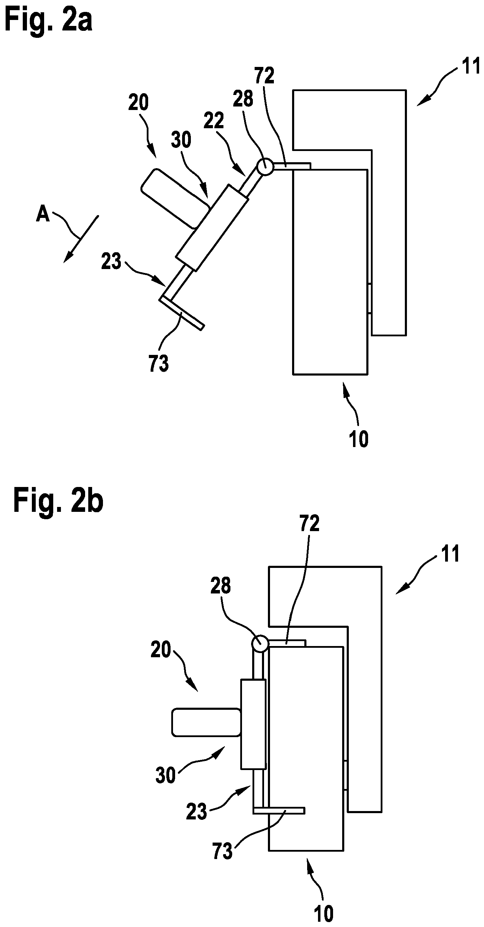

Die Figuren 2a und 2b veranschaulichen schematisch die Montage eines Radadapters 20 gemäß einem Ausführungsbeispiel der Erfindung an einem Rad 10, das an einer schematisch dargestellten Karosserie 11 eines Fahrzeugs angebracht ist.

An einem ersten Arm 22 des Radadapters 20 ist eine erste Kralle 72 angebracht, die zur Befestigung des ersten Armes 22 an dem Rad 10 ausgebildet ist. Die erste Kralle 72 ist insbesondere durch ein Gelenk 28 beweglich an dem ersten Arm 22 angebracht, um die Montage des Radadapters 20 an dem Rad 10 zu vereinfachen.

Nachdem die erste Kralle 72 an einem ersten Bereich des Rades 10, z.B. an dessen Lauffläche, dem Felgenhorn oder der Felge, fixiert worden ist, wird der Radadapter 20, ggf. unter Ausnutzung der Schwerkraft, von der Befestigungsstelle weg gezogen (in Richtung A in Figur 2a). Dadurch wird der erste Arm 22 verlängert, wobei das bewegliche Element 32 des ersten Armes 22 gegenüber dem feststehenden Element 12 des ersten Armes 22 bewegt wird.

Aufgrund der zuvor im Zusammenhang mit der Figur 1 beschriebenen mechanischen Kopplung der beweglichen Elemente 32, 33, 34 durch den Seilzug / Riemen 60 bewegen sich auch die beweglichen Elemente 33, 34 des zweiten und des dritten Armes 23, 24 simultan in gleicher Weise nach außen, so dass sich der Durchmesser / Umfang des Radadapter 20 symmetrisch zum zentralen Bereich 30 vergrößert.

Sobald der für die Montage des Radadapters 20 an dem Rad 10 notwendige Durchmesser / Umfang erreicht ist, werden Krallen 73 des zweiten und dritten Armes 23, 24 an entsprechenden Stellen, z.B. an der Lauffläche, dem Felgenhorn oder der Felge, des Rades 10 fixiert (siehe Figur 2b).

Wenn auf die Arme 22, 23, 24 keine in radialer Richtung nach außen wirkende Kraft ausgeübt wird, ziehen die elastischen Elemente 53, 53 des Einzugsmechanismus die beweglichen Elemente 32, 33, 34 in Richtung auf den zentralen Bereich 30. Dadurch wird der Radadapter 20 an dem Rad 10 festgeklemmt und dadurch (vor)fixiert.

Durch Schließen des wenigstens einen Verschlussmechanismus 50 wird wenigstens eines der beweglichen Elemente 32, 33, 34 sicher gegenüber dem zugehörigen feststehenden Element 12, 13, 14 fixiert. Dadurch wird die für die Achsvermessung notwendige stabile Verbindung des Radadapters 20 mit dem Rad 10 gewährleistet, selbst wenn das Fahrzeug bewegt wird.

Nachdem die Messungen abgeschlossen worden sind, wird der wenigstens eine Verschlussmechanismus 50 geöffnet und der Radadapter 20 wird von dem Rad 10 entfernt.

Die elastischen Elemente 53, 53 des Einzugsmechanismus bewirken, dass die beweglichen Elemente 32, 33, 34 der Arme 22, 23, 24 wieder in Richtung des zentralen Bereichs 30 gezogen werden, so dass der Radadapter 20 in einem kompakten Zustand mit minimalem Durchmesser / Umfang transportiert und gelagert werden kann.

Anstelle der elastischen Elemente 53, 53 können auch (elektrische) Motoren 53, 54 vorgesehen sein, die ausgebildet sind, um die Arme 22, 23, 24 wieder in Richtung des zentralen Bereichs 30 zu ziehen.

## Patentansprüche

1. Radadapter (20) zur Befestigung an einem Rad (10), insbesondere an einem Rad (10) eines Kraftfahrzeugs,
wobei der Radadapter (20) wenigstens zwei Arme (22, 23, 24) aufweist, die sich von einem zentralen Bereich (30) des Radadapters (20) in einer radialen Richtung erstrecken;
wobei jeder der Arme (22, 23, 24) wenigstens ein bewegliches Element (32, 33, 34) aufweist, das in radialer Richtung beweglich ist, um die Länge des Armes (22, 23, 24) in radialer Richtung zu variieren; und
wobei die beweglichen Elemente (32, 33, 34) von wenigstens zwei Armen (22, 23, 24) so mechanisch miteinander gekoppelt sind, dass eine Bewegung eines beweglichen Elements (32) eines ersten Armes (22) in radialer Richtung eine entsprechende Bewegung wenigstens eines beweglichen Elements (33, 34) eine zweiten Armes (23, 24) zur Folge hat;
**dadurch gekennzeichnet, dass** die beweglichen Elemente (32, 33, 34) durch einen Seilzug oder durch einen Riemen (60) miteinander gekoppelt sind.

2. Radadapter (20) nach Anspruch 1, wobei die beweglichen Elemente (32, 33, 34) aller Arme (22, 23, 24) so mechanisch miteinander gekoppelt sind, dass eine Bewegung eines beweglichen Elements (32) eines ersten Armes (22) eine entsprechende Bewegung jeweils wenigstens eines beweglichen Elements (33, 34) aller anderen Arme (23, 24) zur Folge hat.

3. Radadapter (20) nach einem der vorangehenden Ansprüche, wobei der Radadapter (20) wenigstens einen Einzugsmechanismus (53, 54) aufweist, der ausgebildet ist, die beweglichen Elemente (32, 33, 34) der Arme (22, 23, 24) in Richtung des zentralen Bereichs (30) zu bewegen.

4. Radadapter (20) nach Anspruch 3, wobei der Einzugsmechanismus (53, 54) wenigstens ein elastisches mechanischen Element (53, 54), insbesondere wenigstens eine Feder, und/oder einen Elektromotor (53, 54) aufweist.

5. Radadapter (20) nach einem der vorangehenden Ansprüche, wobei die Arme (22, 23, 24) mit feststehenden Schienenelementen (12, 13, 14) und beweglichen Schienenelementen (32, 33, 34) ausgebildet sind.

6. Radadapter (20) nach einem der vorangehenden Ansprüche, wobei die Arme (22, 23, 24) mit Teleskopschienen und/oder Teleskopstangen ausgebildet sind.

7. Radadapter (20) nach einem der vorangehenden Ansprüche, wobei die Arme (22, 23, 24) mit Schubladenausziehscharnieren ausgebildet sind.

8. Radadapter (20) nach einem der vorangehenden Ansprüche, wobei der Radadapter (20) zusätzlich wenigsten einen Verschlussmechanismus (50) aufweist, der es ermöglicht, wenigstens eines der beweglichen Elemente (32, 33, 34) in wenigstens einer Position zu fixieren.

9. Verfahren des Montierens eines Radadapters (20) nach einem der vorangehenden Ansprüche an einem Rad (10), insbesondere an einem Rad (10) eines Kraftfahrzeugs, wobei das Verfahren umfasst:
Fixieren eines ersten beweglichen Elements (32) eines ersten Armes (22) des Radadapters an einer ersten Stelle des Rades (10);
Bewegen des Radadapter (20) so, dass das wenigstens eine bewegliche Element (32) des ersten Armes (22) derart bewegt wird, dass sich der erste Arm (22) in radialer Richtung verlängert; und
Anbringen wenigstens eines zweiten beweglichen Elements (33) eines zweiten Armes (23, 24) an einer zweiten Stelle des Rades (10).

## Claims

1. A wheel adapter (20) for fastening on a wheel (10), in particular a wheel (10) of a motor vehicle,
the wheel adapter (20) comprising at least two arms (22, 23, 24) that extend from a central area (30) of the wheel adapter (20) in a radial direction; wherein each of the arms (22, 23, 24) includes at least one movable ele - ment (32, 33, 34) that is movable in the radial direction in order to vary the length of the arm (22, 23, 24) in the radial direction; and
wherein the movable elements (32, 33, 34) of at least two arms (22, 23, 24) are mechanically coupled to one another in such a way that a movement of a movable element (32) of a first arm (22) in the radial direction results in a corresponding movement of at least one movable element (33, 34) of a sec - ond arm (23, 24);
**characterized in that** the movable elements (32, 33, 34) are coupled to one another by a cable pull or by a belt (60).

2. The wheel adapter (20) according to claim 1,
wherein the movable elements (32, 33, 34) of all arms (22, 23, 24) are me - chanically coupled to one another in such a way that a movement of a mov - able element (32) of a first arm (22) results in a corresponding movement of at least one respective movable element (33, 34) of all other arms (23, 24).

3. The wheel adapter (20) according to any one of the preceding claims,
wherein the wheel adapter (20) comprises at least one retraction mecha - nism (53, 54) which is configured to move the movable elements (32, 33, 34) of the arms (22, 23, 24) in a direction towards the central area (30).

4. The wheel adapter (20) according to claim 3,
wherein the retraction mechanism (53, 54) comprises at least one elastic mechanical element (53, 54), in particular at least one spring, and/or an electric motor (53, 54).

5. The wheel adapter (20) according to any one of the preceding claims,
wherein the arms (22, 23, 24) are formed with stationary rail elements (12, 13, 14) and movable rail elements (32, 33, 34).

6. The wheel adapter (20) according to any one of the preceding claims,
wherein the arms (22, 23, 24) are formed with telescoping slides and/or tele - scoping bars.

7. The wheel adapter (20) according to any one of the preceding claims,
wherein the arms (22, 23, 24) are formed with drawer slide assemblies.

8. The wheel adapter (20) according to any one of the preceding claims,
wherein wheel adapter (20) additionally comprises at least one locking mechanism (50) that permits fixing of at least one of the movable elements (32, 33, 34) in at least one position.

9. A method of mounting a wheel adapter (20) according to any one of the pre - ceding claims on a wheel (10), in particular a wheel (10) of a motor vehicle, the method comprising the steps of:
fixing a first movable element (32) of a first arm (22) of the wheel adapter on a first location of the wheel (10);
moving the wheel adapter (20) such that the at least one movable element (32) of the first arm (22) is moved in such a way that the first arm (22) is extended in the radial direction; and
mounting at least a second movable element (33) of a second arm (23, 24) on a second location of the wheel (10).

## Revendications

1. Adaptateur de roue (20) à fixer à une roue (10), en particulier à une roue (10) de véhicule automobile,
l'adaptateur de roue (20) présentant au moins deux bras (22, 23, 24) qui s'étendent depuis une zone centrale (30) de l'adaptateur de roue (20) dans une direction radiale ;
dans lequel chacun des bras (22, 23, 24) présente au moins un élément mobile (32, 33, 34) qui est mobile en direction radiale de manière à faire varier la longueur du bras (22, 23, 24) en direction radiale ; et
dans lequel les éléments mobiles (32, 33, 34) d'au moins deux bras (22, 23, 24) sont couplés entre eux mécaniquement de telle sorte qu'un mouvement d'un élément mobile (32) d'un premier bras (22) en direction radiale entraîne un mouvement correspondant d'au moins un élément (33, 34) d'un deuxième bras (23, 24) ;
**caractérisé en ce que** les éléments mobiles (32, 33, 34) sont couplés entre eux par un câble ou une courroie (60).

2. Adaptateur de roue (20) selon la revendication 1, dans lequel les éléments mobiles (32, 33, 34) de tous les bras (22, 23, 24) sont couplés entre eux mécaniquement de telle sorte qu'un mouvement d'un élément mobile (32) d'un premier bras (22) entraîne un mouvement correspondant d'au moins un élément mobile (33, 34) de tous les autres bras (23, 24).

3. Adaptateur de roue (20) selon l'une quelconque des revendications précédentes, dans lequel l'adaptateur de roue (20) présente au moins un mécanisme de retrait (53, 54) réalisé de manière à déplacer les éléments mobiles (32, 33, 34) des bras (22, 23, 24) en direction de la zone centrale (30).

4. Adaptateur de roue (20) selon la revendication 3, dans lequel le mécanisme de retrait (53, 54) présente au moins un élément mécanique élastique (53, 54), en particulier au moins un ressort et/ou un moteur électrique (53, 54).

5. Adaptateur de roue (20) selon l'une quelconque des revendications précédentes, dans lequel les bras (22, 23, 24) sont réalisés avec des éléments de glissière fixes (12, 13, 14) et des éléments de glissière mobiles (32, 33, 34).

6. Adaptateur de roue (20) selon l'une quelconque des revendications précédentes, dans lequel les bras (22, 23, 24) sont réalisés avec des glissières télescopiques et/ou des tiges télescopiques.

7. Adaptateur de roue (20) selon l'une quelconque des revendications précédentes, dans lequel les bras (22, 23, 24) sont réalisés avec des coulisses de tiroir.

8. Adaptateur de roue (20) selon l'une quelconque des revendications précédentes, dans lequel l'adaptateur de roue (20) présente en outre au moins un mécanisme de fermeture (50) qui permet de fixer au moins un des éléments mobiles (32, 33, 34) dans au moins une position.

9. Procédé de montage d'un adaptateur de roue (20) selon l'une quelconque des revendications précédentes sur une roue (10), en particulier sur une roue (10) d'un véhicule automobile, le procédé comprenant :
la fixation d'un premier élément mobile (32) d'un premier bras (22) de l'adaptateur de roue en un premier emplacement de la roue (10) ;
le déplacement de l'adaptateur de roue (20) de manière à ce qu'au moins un élément mobile (32) du premier bras (22) soit déplacé de telle sorte que le premier bras (22) soit allongé en direction radiale ; et
le placement d'au moins un deuxième élément mobile (33) d'un deuxième bras (23, 24) en un deuxième emplacement de la roue (10).
